# EUROPÄISCHE PATENTSCHRIFT

(11) **EP 1 484 211 B1**
(45) Veröffentlichungstag und Bekanntmachung des Hinweises auf die Patenterteilung: **31.01.2007**
(21) Anmeldenummer: 04100992.9
(22) Anmeldetag: 11.03.2004
(51) Int. Cl.: B60K 15/00, F02M 37/10

(54) **Kraftstoffbehälter mit mehreren Schwalltöpfen**
Fuel tank with several swirl pots
reservoir à carburant avec des reservoirs internes

(30) Priorität: 17.04.2003 DE 10318050
(43) Veröffentlichungstag der Anmeldung: 08.12.2004
(73) Patentinhaber: SIEMENS AKTIENGESELLSCHAFT, 80333 München (DE)
(72) Erfinder: Maasz, Martin, 65843, Sulzbach (DE)

(56) Entgegenhaltungen:
- EP-A- 0 629 522
- EP-A- 1 302 354
- US-A- 5 197 444
- US-A- 5 427 074
- US-B1- 6 276 342
- US-B1- 6 371 153
- US-B1- 6 457 459

## Beschreibung

Die Erfindung betrifft einen Kraftstoffbehälter für ein Kraftfahrzeug mit mehreren Schwalltöpfen zum Sammeln von Kraftstoff, mit mehreren Kraftstoffpumpen zur Förderung von Kraftstoff aus den Schwalltöpfen zu einer Brennkraftmaschine des Kraftfahrzeuges und zur Förderung von Kraftstoff zu im Kraftstoffbehälter angeordneten Saugstrahlpumpen und mit Förderleitungen der Saugstrahlpumpen zur Förderung von Kraftstoff in die Schwalltöpfe.

Solche Kraftstoffbehälter werden insbesondere für leistungsstarke Kraftfahrzeuge, bei denen eine einzige Fördereinheit mit einem Schwalltopf und einer Kraftstoffpumpe wegen ihrer durch die Leistungswerte zu großen Abmessungen schwierig im Kraftstoffbehälter anzuordnen ist, häufig eingesetzt und sind aus der Praxis bekannt. Die Kraftstoffpumpen weisen dabei meist eine Vorstufe zur Förderung des Kraftstoffs aus dem Kraftstoffbehälter unmittelbar in den Schwalltopf und eine Hauptstufe zur Förderung des Kraftstoffs aus dem Schwalltopf zu der Brennkraftmaschine auf und sind innerhalb des Schwalltopfes angeordnet. Häufig wird zudem Kraftstoff von einem Druckregler in Form einer Rücklaufsteuerung in die Schwalltöpfe zurückgeführt. Diese Gestaltung hat den Vorteil, dass die Schwalltöpfe auf mehrere Weisen gefüllt werden.

Nachteilig ist jedoch, dass die Saugstrahlpumpen permanent mit Kraftstoff von den Kraftstoffpumpen versorgt werden. Dies führt zu einer unnötigen Umwälzung von Kraftstoff und damit zu einer hohen Permeation an Kraftstoff aus dem Kraftstoffbehälter. Weiterhin führt die ständige Umwälzung des Kraftstoffs zur Bildung von Gasblasen im Kraftstoff und damit zu einer Beeinträchtigung der Förderung des Kraftstoffs.

Man hat bereits daran gedacht, die Schwalltöpfe mit Schwimmerventilen zu steuern, so dass bei einem gefüllten Schwalltopf kein weiterer Kraftstoff aus dem Rücklauf in diesen Schwalltopf geführt wird. Hierdurch gestaltet sich der Kraftstoffbehälter jedoch konstruktiv sehr aufwändig und störanfällig.

Aus der US 5,427,074 ist weiterhin eine Fördereinheit mit einem Schwalltopf bekannt, bei der der Schwalltopf mit einem Deckel verschlossen ist, wobei der Deckel eine Öffnung besitzt, die mit einem Schwimmer als zusätzliches Bauteil verschließbar ist.

Dokument US6276342 offenbart einen Kraftstoffbehälter für ein Kraftfahrzeug mit mehreren Schwalltöpfen zum Sammeln von Kraftstoff, mit mehreren Kraftstoffpumpen zur Förderung von Kraftstoff aus den Schwalltöpfen zu einer Brennkraftmaschine des Kraftfahrzeuges und zur Förderung von Kraftstoff zu im Kraftstoffbehälter angeordneten Saugstrahlpumpen und mit Förderleitungen der Saugstrahlpumpen zur Förderung von Kraftstoff in die Schwalltöpfe, wobei jeweils in einander gegenüberliegenden Kammern des Kraftstoffbehälters angeordnete Saugstrahlpumpen Kraftstoff über Summenstrahlleitungen in den Schwalltopf der jeweils gegenüberliegenden Kammer fördern.

Der Erfindung liegt das Problem zugrunde, einen Kraftstoffbehälter der eingangs genannten Art so zu gestalten, dass eine unnötige Umwälzung durch die Saugstrahlpumpen weitgehend vermieden wird.

Dieses Problem wird erfindungsgemäß durch einen Kraftstoffbehälter gemäß Anspruch 1 gelöst, nämlich dadurch dass die Schwalltöpfe im Wesentlichen dichtend verschlossen sind und Mittel zur Begrenzung eines Maximaldrucks aufweisen, wobei die Druckbegrenzung durch die Dichtheit des jeweiligen Schwalltopfes und der sich infolge des steigenden Druckes ergebenden Begrenzung der Förderleistung der Saugstrahlpumpen erfolgt und dass jeweils in einander gegenüberliegenden Kammern des Kraftstoffbehälters angeordnete Saugstrahlpumpen Kraftstoff über Summenstrahlleitungen in den Schwalltopf der jeweils gegenüberliegenden Kammer fördern.

Durch diese Gestaltung weisen die Schwalltöpfe eine Selbstregelung auf, wodurch eine Förderung von Kraftstoff in den gefüllten Schwalltopf zu einem Ansteigen des Drucks und damit zu einem Gegendruck an den Saugstrahlpumpen führt. Durch das Ansteigen des Drucks in den Schwalltöpfen wird die Förderleistung der Saugstrahlpumpen deshalb stark verringert. Damit wird Dank der Erfindung ein Überlaufen der Schwalltöpfe und ein unnötiges Umwälzen des Kraftstoffs im Kraftstoffbehälter vermieden. Der erfindungsgemäße Kraftstoffbehälter benötigt keine aufwändig aufgebauten und störanfälligen Schwimmerventile. Der Kraftstoffbehälter ist daher konstruktiv besonders einfach aufgebaut. Ein besonders großer, von dem von der Brennkraftmaschine zurückgeführten Kraftstoff erzeugter Druck wird über die Saugstrahlpumpe abgebaut, indem der Kraftstoff entgegen der vorgesehenen Strömungsrichtung der Saugstrahlpumpe gelenkt wird. Die erfindungsgemäße Vorrichtung bewirkt somit eine Verbesserung des Wirkungsgrades der Rücklaufsteuerung.

Eine bevorzugte Befüllung einer der Schwalltöpfe auf Grund von unterschiedlichen Strömungswiderständen in den Leitungen ist für den sicheren Betrieb der Kraftstoffpumpen unproblematisch.

Weiterhin wird beispielsweise bei Kurvenfahrt oder Bergfahrt des Kraftfahrzeuges der Gefahr begegnet, dass einer der Schwalltöpfe leer läuft, was zu einer Beschädigung der daraus ansaugenden Kraftstoffpumpe führt und auf Grund der nicht ausreichenden Kraftstoffversorgung der Brennkraftmaschine zu Aussetzern führt.

Ebenso wird vermieden, dass bei Kurvenfahrt des Kraftfahrzeuges und nahezu leerem Kraftstoffbehälter sich der gesamte Kraftstoff in einer einzigen Kammer des Kraftstoffbehälters sammelt und ein Leerlaufen des in der gegenüberliegenden Kammer angeordneten Schwalltopfes erfolgt.

Bei einer von einem Druckregler kommenden Rücklaufleitung lässt sich eine sichere Befüllung aller Schwalltöpfe einfach sicherstellen, wenn die Rücklaufleitung in mehrere Schwalltöpfe mündet. Durch die erfindungsgemäße Gestaltung des Kraftstoffbehälters wird der zurückgeführte Kraftstoff in den Schwalltopf geleitet, der den geringsten Gegendruck hat. Bei dieser Aufteilung des Kraftstoffs führen unterschiedliche Strömungswiderstände in den Leitungen infolge der Selbstregelung der Befüllung der Schwalltöpfe nicht zu einer Beeinträchtigung.

Eine Be- und Entlüftung der Schwalltöpfe wird gemäß einer anderen vorteilhaften Weiterbildung der Erfindung über die Summenstrahlleitungen der jeweiligen Saugstrahlpumpe erreicht.

Gleichzeitig wird dadurch eine ausreichende Selbstregelung der Förderleistung der Saugstrahlpumpen und der Füllung der Schwalltöpfe erreicht.

Zur weiteren Vereinfachung des konstruktiven Aufbaus des erfindungsgemäßen Kraftstoffbehälters trägt es bei, wenn die Schwalltöpfe ein topfförmiges Grundteil und einen die Öffnung des topfförmiges Grundteil verschließenden Deckel aufweisen.

Der erfindungsgemäße Kraftstoffbehälter lässt sich besonders einfach montieren, wenn der Deckel mit dem topfförmigen Grundteil verklippst ist.

Eine zuverlässige Abdichtung des Deckels des Schwalltopfs gegenüber dem topfförmigen Grundteil lässt sich im Betrieb des Kraftstoffbehälters einfach erreichen, wenn der Deckel und/oder das Grundteil aus einem mit Kraftstoff quellfähigen Material gefertigt ist/sind.

Zur weiteren Verbesserung der Abdichtung der Schwalltöpfe trägt es gemäß einer anderen vorteilhaften Weiterbildung der Erfindung bei, wenn der Deckel ein Dichtelement zu seiner Abdichtung gegenüber dem Grundteil aufweist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: schematisch eine Schnittdarstellung durch einen erfindungsgemäßen Kraftstoffbehälter,
- Figur 2: schematisch eine Schnittdarstellung durch einen Schwalltopf des erfindungsgemäßen Kraftstoffbehälters aus Figur 1.

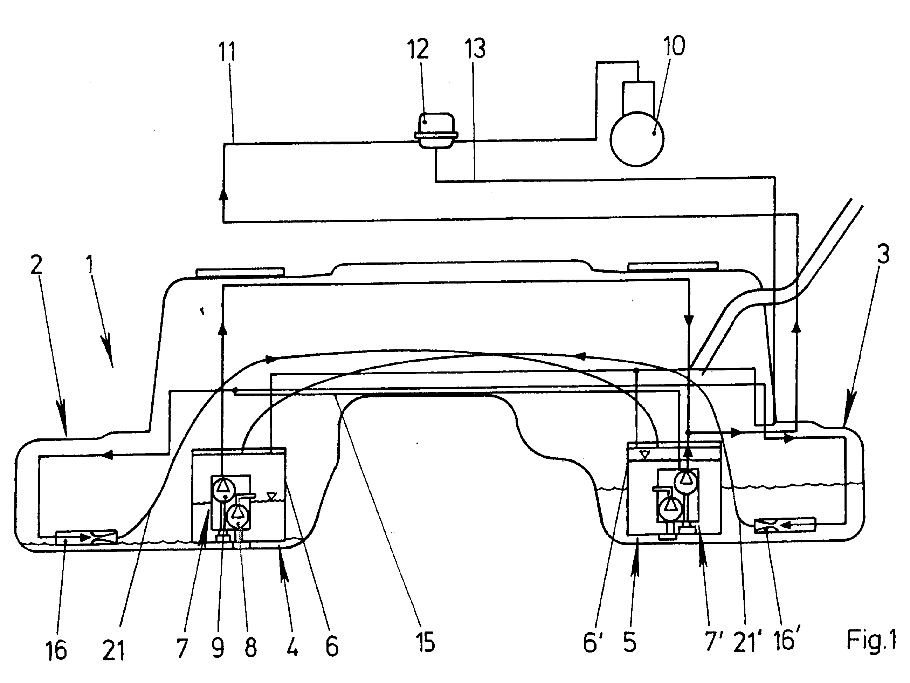

Figur 1 zeigt einen Kraftstoffbehälter 1 mit zwei Kammern 2, 3 und jeweils einer darin angeordneten Fördereinheit 4, 5. Die Fördereinheiten 4, 5 weisen jeweils einen Schwalltopf 6, 6' mit einer darin angeordneten zweistufigen Kraftstoffpumpe 7,7' auf. Die Kraftstoffpumpen 7, 7' haben jeweils eine Vorstufe 8, mit der Kraftstoff aus dem Kraftstoffbehälter 1 in den jeweiligen Schwalltopf 6, 6' gefördert wird, und eine Hauptstufe 9 zur Förderung von Kraftstoff aus dem Schwalltopf 6,6' zu einer Brennkraftmaschine 10. Bei der Vorstufe 8 kann es sich beispielsweise um eine von der Hauptstufe 9 angetriebenen Saugstrahlpumpe handeln oder eine elektrisch angetriebene Pumpe handeln. In einer Vorlaufleitung 11 zwischen den Kraftstoffpumpen 7, 7' und der Brennkraftmaschine 10 ist ein Druckregler 12 angeordnet. Bei einer Überschreitung eines vorgesehenen Drucks von beispielsweise 4 bar wird Kraftstoff über eine Rücklaufleitung 13 in den Kraftstoffbehälter 1 zurückgeführt. Die Rücklaufleitung 13 ist an beide Schwalltöpfe 6, 6' angeschlossen. Eine der Kraftstoffpumpen 7' ist über eine Treibmittelleitung 15 mit zwei Saugstrahlpumpen 16, 16' verbunden. Es ist aber auch denkbar, jede Saugstrahlpumpe von je einer Kraftstoffpumpe zu betreiben. Die Saugstrahlpumpen 16, 16' sind ebenfalls in den Kammern 2, 3 angeordnet und fördern Kraftstoff über die Summenstrahlleitungen 20, 21' in den Schwalltopf 6, 6' der jeweils gegenüberliegenden Kammer 2, 3.

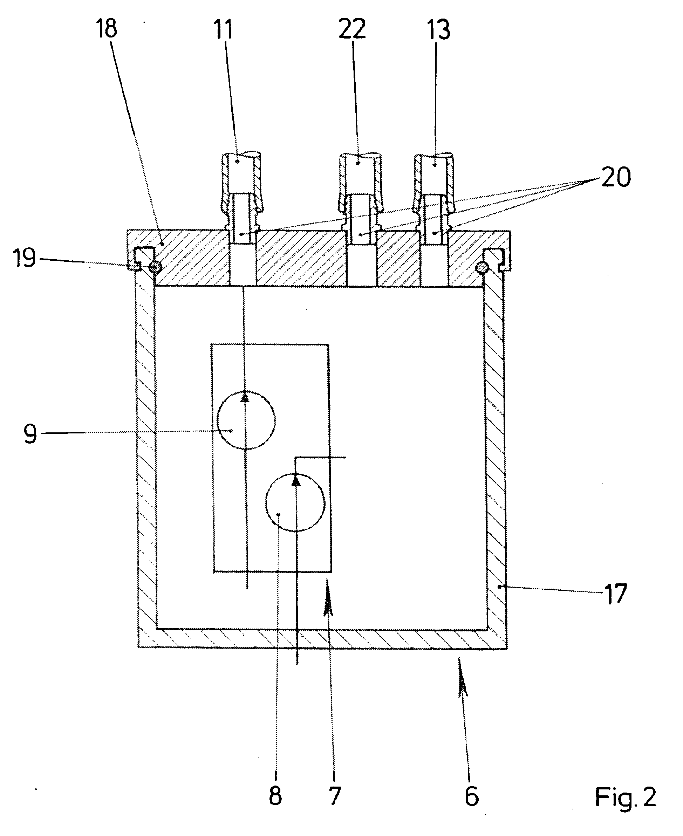

Figur 2 zeigt schematisch eine Schnittdarstellung durch einen der Schwalltöpfe 6 aus Figur 1 mit der darin angeordneten Kraftstoffpumpe 7. Hierbei ist zu erkennen, dass der Schwalltopf 6 ein topfförmiges Grundteil 17 und einen mit dem Grundteil 17 verklippsten Deckel 18 aufweist. Der Deckel 18 ist mittels eines Dichtelementes 19 gegenüber dem Grundteil 17 abgedichtet. In dem Deckel 18 sind Anschlüsse 20 für die Vorlaufleitung, die Rücklaufleitung 13 und für eine von der Saugstrahlpumpe 16' kommenden Leitung 22 angeordnet.

## Patentansprüche

1. Kraftstoffbehälter (1) für ein Kraftfahrzeug mit mehreren Schwalltöpfen (6,6') zum Sammeln von Kraftstoff, mit mehreren Kraftstoffpumpen (8,9) zur Förderung von Kraftstoff aus den Schwalltöpfen (6,6') zu einer Brennkraftmaschine des Kraftfahrzeuges und zur Förderung von zu im Kraftstoffbehälter angeordneten Saugstrahlpumpen (16,16') und mit Förderleitungen (21, 21') der Saugstrahlpumpen (16,16') zur Förderung von Kraftstoff in die Schwalltöpfe (6,6'), wobei die Schwalltöpfe (6, 6') im Wesentlichen dichtend verschlossen sind und Mittel zur Begrenzung eines Maximaldrucks aufweisen, wobei die Druckbegrenzung durch die Dichtheit des jeweiligen Schwalltopfes (6, 6') und der sich infolge des steigenden Druckes ergebenden Begrenzung der Förderleistung der Saugstrahlpumpen (16, 16') erfolgt und jeweils in einander gegenüberliegenden Kammern (2, 3) des Kraftstoffbehälters (1) angeordnete Saugstrahlpumpen (16, 16') Kraftstoff über Summenstrahlleitungen (21, 21') in den Schwalltopf (6,6') der jeweils gegenüberliegenden Kammer (2,3) fördern.

2. Kraftstoffbehälter nach Anspruch 1, **dadurch gekennzeichnet, dass** eine von einem Druckregler kommende Rücklaufleitung (13) in mehrere Schwalltöpfe (6, 6') mündet.

3. Kraftstoffbehälter nach zumindest einem der vorhergehenden Ansprüche, **dadurch gekennzeichnet, dass** die Schwalltöpfe (6, 6') ein topfförmiges Grundteil (17) und einen die Öffnung des topfförmiges Grundteil (17) verschließenden Deckel (18) aufweisen.

4. Kraftstoffbehälter nach zumindest einem der vorhergehenden Ansprüche, **dadurch gekennzeichnet, dass** der Deckel (18) mit dem topfförmigen Grundteil (17) verklippst ist.

5. Kraftstoffbehälter nach zumindest einem der vorhergehenden Ansprüche, **dadurch gekennzeichnet, dass** der Deckel (18) oder das Grundteil (17) aus einem in Kraftstoff quellfähigen Material gefertigt ist.

6. Kraftstoffbehälter nach zumindest einem der vorhergehenden Ansprüche, **dadurch gekennzeichnet, dass** der Deckel (18) ein Dichtelement (19) zu seiner Abdichtung gegenüber dem Grundteil (17) aufweist.

## Claims

1. Fuel tank (1) for a motor vehicle having a plurality of surge chambers (6, 6') for collecting fuel, having a plurality of fuel pumps (8, 9) for feeding fuel from the surge chambers (6, 6') to an internal combustion engine of the motor vehicle and for feeding fuel to suction jet pumps (16, 16') arranged in the fuel tank, and having feed lines (21, 21') for the suction jet pumps (16, 16') for feeding fuel into the surge chambers (6, 6'), the surge chambers (6, 6') being closed in a manner essentially forming a seal and having means for limiting a maximum pressure, the limiting of the pressure taking place by the tightness of the particular surge chamber (6, 6') and the limiting, which arises as a consequence of the rising pressure, of the feeding capacity of the suction jet pumps (16, 16'), and suction jet pumps (16, 16') arranged in each case in mutually opposite chambers (2, 3) of the fuel tank (1) feeding fuel via combined jet lines (21, 21') into the surge chamber (6, 6') of the respectively opposite chamber (2, 3).

2. Fuel tank according to claim 1, **characterized in that** a return line (13) coming from a pressure regulator opens into a plurality of surge chambers (6, 6').

3. Fuel tank according to at least one of the preceding claims, **characterized in that** the surge chambers (6, 6') have a cup-shaped base part (17) and a cover (18) which closes the opening of the cup-shaped base part (17).

4. Fuel tank according to at least one of the preceding claims, **characterized in that** the cover (18) is clipped to the cup-shaped base part (17).

5. Fuel tank according to at least one of the preceding claims, **characterized in that** the cover (18) or the base part (17) is manufactured from a material which is capable of swelling in fuel.

6. Fuel tank according to at least one of the preceding claims, **characterized in that** the cover (18) has a sealing element (19) to seal it off from the base part (17).

## Revendications

1. Réservoir à carburant (1) pour un véhicule automobile, comportant plusieurs pots d'accumulation (6, 6') destinés à accumuler du carburant, plusieurs pompes à carburant (8, 9) destinées au transfert de carburant des pots d'accumulation (6, 6') vers un moteur à combustion interne du véhicule automobile et au transfert de carburant vers des pompes à jet aspirant (16, 16') installées dans le réservoir à carburant et des conduites de refoulement (21, 21') des pompes à jet aspirant (16, 16') destinées au transfert de carburant dans les pots d'accumulation (6, 6'), où les pots d'accumulation (6, 6') sont essentiellement fermés d'une façon étanche et comportent des moyens destinés à la limitation d'une pression maximum, la limitation de la pression étant provoquée par l'étanchéité des pots d'accumulation (6, 6') respectifs et par la limitation de la puissance de transfert des pompes à jet aspirant (16, 16') résultant de l'augmentation de la pression et des pompes à jet aspirant (16, 16'), disposées chacune dans des compartiments (2, 3) du réservoir à carburant (1) se trouvant d'un côté opposé l'un par rapport à l'autre, transférant du carburant, à travers des conduites à jet cumulé (21, 21'), dans le pot d'accumulation (6, 6') du compartiment (2, 3) se trouvant dans chaque cas du côté opposé.

2. Réservoir à carburant selon la revendication 1, **caractérisé par le fait qu'**une conduite de reflux (13) venant d'un régulateur de pression débouche dans plusieurs pots d'accumulation (6, 6').

3. Réservoir à carburant selon au moins l'une des revendications précédentes, **caractérisé par le fait que** les pots d'accumulation (6, 6') comportent une pièce de base (17) en forme de pot et un couvercle (18) fermant l'ouverture de la pièce de base (17) en forme de pot.

4. Réservoir à carburant selon au moins l'une des revendications précédentes, **caractérisé par le fait que** le couvercle (18) est agrafé à la pièce de base (17) en forme de pot.

5. Réservoir à carburant selon au moins l'une des revendications précédentes, **caractérisé par le fait que** le couvercle (18) ou la pièce de base (17) en forme de pot est fabriqué en une matière gonflant au contact du carburant.

6. Réservoir à carburant selon au moins l'une des revendications précédentes, **caractérisé par le fait que** le couvercle (18) comporte un organe d'étanchéité (19) pour le rendre étanche par rapport à la pièce de base (17).
